# FASCICULE DE BREVET EUROPEEN

(11) **EP 0 394 141 B1**
(45) Date de publication et mention de la délivrance du brevet: **25.01.1995**
(21) Numéro de dépôt: 90401080.8
(22) Date de dépôt: 20.04.1990
(51) Int. Cl.: B01D 53/32, C01B 17/04

(54) **Procédé de traitement électrochimique d'un gaz contenant de l'hydrogène sulfuré**
Verfahren zur elektrochemischen Behandlung von Schwefelwasserstoff enthaltendem Gas
Process for the electrochemical treatment of an hydrogen sulfide containing gas

(30) Priorité: 21.04.1989 FR 8905356
(43) Date de publication de la demande: 24.10.1990
(73) Titulaire: BUREAU DE RECHERCHES GEOLOGIQUES ET MINIERES, ETABLISSEMENT PUBLIC A CARACTERE INDUSTRIEL ET COMMERCIAL, 75739 Paris Cédex 15 (FR)
(72) Inventeur: Czernichowski, Albin, F-45100 Orleans (FR); Czernichowski, Isabelle, F-45100 Orleans (FR); Chapelle, Joseph, F-45100 Orleans (FR); Fouillac, Christian, F-45190 Beaugency (FR); Lesueur, Hervé, F-45650 Saint Jean le Blanc (FR)
(74) Mandataire: Bruder, Michel

(56) Documents cités:
- WO-A-87/02909
- FR-A- 2 620 436
- LU-A- 68 087
- US-A- 4 772 366

## Description

La présente invention concerne un procédé de traitement électrochimique d'un gaz contenant de l'hydrogène sulfuré.

Il est bien connu que l'hydrogène sulfuré est présent à la fois dans les fluides issus du sous-sol, tels que les fluides géothermaux de haute ou basse énergie, les gaz naturels tels que les hydrocarbures légers ou le gaz carbonique, les gaz stockés dans des réservoirs naturels souterrains ou encore les fluides utilisés pour une récupération assistée du pétrole, et dans les gaz industriels tels que ceux issus de la désulfuration des gaz de cokeries, ceux issus de la désulfuration du pétrole, les gaz de queue issus des procédés de dépollution déjà installés, les gaz de pyrolyse du caoutchouc, les gaz métallurgiques, les gaz de l'industrie du papier, les gaz issus de la désulfuration des biogaz, de l'industrie de la viscose etc...

La teneur des gaz naturels et industriels en hydrogène sulfuré est variable et elle peut être élevée dans les gaz naturels : par exemple le gaz extrait du gisement français de Lacq contient environ 15% d'hydrogène sulfuré et 10% de gaz carbonique, ce qui correspondait à une extraction, en 1987, de près de 2800 tonnes d'hydrogène sulfuré par jour. Dans les gaz mis en oeuvre dans la géothermie, la teneur en hydrogène sulfuré est généralement plus faible et il en est de même en ce qui concerne les gaz industriels.

Quelle que soit son origine l'hydrogène sulfuré est un produit polluant et on a de tout temps cherché à détruire l'hydrogène sulfuré produit naturellement ou industriellement et éventuellement à le valoriser. Dans ce but on a utilisé divers procédés industriels de traitement de l'hydrogène sulfuré et parmi ces procédés on peut citer le procédé CLAUS qui est employé depuis 100 ans et qui permet d'obtenir une transformation d'un gaz renfermant de l'hydrogène sulfuré en soufre et en vapeur d'eau. Dans ce procédé on amène le gaz renfermant de l'hydrogène sulfuré, appelé encore gaz acide, dans un étage de réaction thermique dans lequel on transforme un tiers de l'hydrogène sulfuré en SO₂ en présence d'oxygène ou d'air à une température au moins égale à 900°C. L'hydrogène sulfuré en excès réagit ensuite partiellement avec le SO₂ formé en donnant du soufre et de la vapeur d'eau. Ce procédé CLAUS qui utilise un étage de réaction thermique pour oxyder en SO₂ la quantité requise d'H₂S, ne peut être mis en oeuvre qu'avec des concentrations importantes en H₂S dans le gaz acide qui, dans la plupart des cas, contient également du CO₂. Ce procédé CLAUS est difficile à mettre en oeuvre parce que la combustion partielle contrôlée de l'hydrogène sulfuré nécessite la surveillance aussi bien de la quantité d'oxygène introduite que des corrosions dues à un milieu gazeux contenant tous les composants pour donner des acides très agressifs. Il en résulte que les chaudières à soufre qui mettent en oeuvre le procédé CLAUS sont sujettes à de fréquentes avaries et nécessitent un entretien constant.

D'autres procédés connus, plus ou moins industrialisés, permettent d'obtenir la destruction de l'hydrogène sulfuré dans les mélanges dilués en se basant sur des réactions d'oxydation, notamment en phase aqueuse qui aboutissent soit à la production d'eau et de soufre soit à la production d'acide sulfurique. Ces réactions peuvent être souvent assistées par des catalyseurs. Tous ces derniers procédés par voie aqueuse demandent des volumes importants d'appareillages soumis à une corrosion par des solutions agressives, d'où un coût élevé d'investissement et aussi d'entretien. Ils présentent également l'inconvénient d'exiger une consommation importante de réactifs chimiques divers et de soulever des problèmes d'environnement créés par les produits finaux obyenus par ces procédés.

La présente invention vise à remédier aux inconvénients précités des divers procédés connus.

A cet effet ce procédé électrochimique, en phase gazeuse, de traitement d'un gaz contenant de l'hydrogène sulfuré à l'aide de décharges électriques, est caractérisé en ce que l'on place, dans un écoulement du mélange gazeux ou de la vapeur contenant l'hydrogène sulfuré, au moins deux électrodes présentant des profils divergeant l'un de l'autre dans le sens de l'écoulement du gaz et en ce que l'on produit, entre les électrodes et en travers de l'écoulement du gaz, des décharges électriques glissantes, s'amorçant à l'endroit où la distance entre les électrodes est la plus faible puis glissant progressivement le long des électrodes en s'allongeant jusqu'à la rupture sous l'action de l'écoulement de manière qu'elles disparaissent pour se reformer immédiatement à l'endroit où la distance entre les électrodes est la plus faible, et, l'énergie électrique spécifique apportée au mélange gazeux contenant l'hydrogène sulfuré, pour conduire la conversion de l'hydrogène sulfuré, est inférieure à 2 kWh/Nm³ d'hydrogène sulfuré alors que l'intensité du courant d'une décharge ne dépasse pas 20 ampères et que la tension moyenne s'établit entre 1000 et 2000 V.

Le procédé suivant l'invention présente de nombreux avantages par rapport aux procédés connus. Il permet de détruire pratiquement la totalité de l'hydrogène sulfuré présent dans un gaz et ce sans faire appel à un additif chimique, d'où une économie importante, et avec une faible consommation d'énergie électrique. Ses conditions d'utilisation sont très souples puisqu'il peut être utilisé avec n'importe quel débit et/ou température sans limite de pression du gaz ou de la vapeur et sans limitation en ce qui concerne la composition initiale du gaz ou de la vapeur. En particulier un rapport élevé CO₂/H₂S dans le gaz à traiter n'est pas gênant à la différence des procédés connus. Le procédé suivant l'invention n'exige aucun traitement préliminaire particulier pour le contrôle de l'hydrogène sulfuré dans des charges contenant du méthane. Par ailleurs du fait qu'il ne fait pas appel à un catalyseur, on ne risque pas de voir ce catalyseur "empoisonné" par un composant quelconque se trouvant dans le fluide à traiter.

Le procédé suivant l'invention peut être aisément mis en oeuvre en différents points d'une installation géothermique, il permet une élimination rapide, en une seule étape, de l'hydrogène sulfuré, il peut être adapté à n'importe quelle taille de l'exploitation, il peut être démarré et arrêté rapidement et aisément. La perte de charge dans l'écoulement, due au réacteur électrochimique utilisé, est faible et ce réacteur peut avoir un faible volume. Il en résulte qu'il n'y a aucune limitation d'espace du fait que l'appareil mettant en oeuvre le procédé suivant l'invention est compact et qu'il exige un espace bien moindre que celui nécessité par un procédé classique du type CLAUS.

Le procédé suivant l'invention autorise la récupération éventuelle des sous-produits, par exemple du soufre pur et de l'hydrogène, à des températures et pressions exigées pour une étape suivante d'un processus industriel, sans exiger une quelconque purification, compression ou préchauffage.

L'énergie électrique nécessaire consommée est relativement faible, de l'ordre du kilowatt pour un débit de 1 Nm3/h, et elle est variable suivant le débit de mélange gazeux à traiter. Elle peut néanmoins dépasser 2 kW pour un débit de 1 Nm3/h lorsque l'on désire surchauffer le mélange. L'intensité de la décharge électrique est variable mais reste toutefois limitée à une valeur inférieure à 20 ampères pour des raisons de durée de vie des électrodes. Au cours d'essais effectués on a utilisé une décharge électrique sous une tension moyenne allant de 1000 à 2000 volts, avec une période de "glissement" de la décharge allant de 1 à 20 millisecondes. On peut utiliser, pour la production du courant alternatif créant la décharge électrique, un générateur ayant la fréquence du secteur, c'est-à-dire 50Hz, ou bien encore une fréquence supérieure pouvant aller jusqu'à 1kHz. Le procédé suivant l'invention peut également fonctionner en courant continu.

## Revendications

1. Procédé électrochimique, en phase gazeuse, de traitement d'un gaz contenant de l'hydrogène sulfuré à l'aide de décharges électriques, caractérisé en ce que l'on place, dans un écoulement du mélange gazeux ou de la vapeur contenant l'hydrogène sulfuré, au moins deux électrodes présentant des profils divergeant l'un de l'autre dans le sens de l'écoulement du gaz et en ce que l'on produit, entre les électrodes et en travers de l'écoulement du gaz, des décharges électriques glissantes, s'amorçant à l'endroit où la distance entre les électrodes est la plus faible puis glissant progressivement le long des électrodes en s'allongeant jusqu'à la rupture sous l'action de l'écoulement de manière qu'elles disparaissent pour se reformer immédiatement à l'endroit où la distance entre les électrodes est la plus faible, et, l'énergie électrique spécifique apportée au mélange gazeux contenant l'hydrogène sulfuré, pour conduire la conversion de l'hydrogène sulfuré, est inférieure à 2 kWh/Nm³ d'hydrogène sulfuré alors que l'intensité du courant d'une décharge ne dépasse pas 20 ampères et que la tension moyenne s'établit entre 1000 et 2000 V.

## Claims

1. Electrochemical process, in gaseous phase, for the treatment of a gas containing hydrogen sulfide employing electrical discharges, characterized in that there are placed in a flow of the gaseous mixture or of the vapour containing the hydrogen sulfide, at least two electrodes presenting profiles diverging from one another in the direction of flow of the gas, and in that there are produced, between the electrodes and across the flow of the gas, sliding electrical discharges, starting at the place where the distance between the electrodes is the shortest then sliding progressively along the electrodes, extending up to rupture under the action of the flow so that they disappear, to be immediately reformed at the place where the distance between the electrodes is the shortest, and the specific electrical energy brought to the gaseous mixture containing hydrogen sulfide to lead to the conversion of the hydrogen sulfide, is less than 2 kWh/Nm³ of hydrogen sulfide while the intensity of the current of a discharge does not exceed 20 amperes and the mean voltage is established between 1000 and 2000 V.

## Patentansprüche

1. Elektrochemisches Verfahren in Gasphase, zur Behandlung eines Schwefelwasserstoff enthaltenden Gases mittels elektrischen Entladungen, dadurch gekennzeichnet, daß in einem Strom eines Schwefelwasserstoff enthaltenden Gas- oder Dampfgemisches mindestens zwei Elektroden angeordnet werden, deren Profile sich in Richtung des Gasstromes voneinander entfernen, und dadurch daß zwischen den Elektroden und quer zum Gasstrom gleitende elektrische Entladungen erzeugt werden welche an der Stelle mit dem geringsten Abstand zwischen da Elektroden zünden und dann fortschreitend die Elektroden entlaggleiten und dabei länger werden, bis sie unter der Einwirkung der Strömung abreißen, derart daß sie verschwinden und sich sofort wieder an der Stelle mit dem geringsten Elektrodenabstand bilden, sowie dadurch, daß die spezifische elektrische Energie, die dem Schwefelwasserstoff enthaltenden Gasgemisch zugeführt wird, um die Umwandlung des Schwefelwasserstoffes zu betreiben, geringer ist als 2 kWh/Nm³ von Schwefelwasserstoff während die Entladungsstromstärke 20 Ampere nicht überschreitet und die mittlere Spannung zwischen 1000 und 2000 V liegt.
